# FASCICULE DE BREVET EUROPEEN

(11) **EP 2 055 987 B1**
(45) Date de publication et mention de la délivrance du brevet: **12.05.2010**
(21) Numéro de dépôt: 08167723.9
(22) Date de dépôt: 28.10.2008
(51) Int. Cl.: F16H 3/089

(54) **Boîte de vitesses à double synchroniseur et procédés de changement de rapport montant et descendant associés**
Getriebe mit Doppelsynchronisierungsvorrichtung und Verfahren zur Veränderung des damit verbundenen aufsteigenden und absteigenden Übersetzungsverhältnisses
Gearbox with double synchroniser and associated upward and downward shifting methods

(30) Priorité: 29.10.2007 FR 0758645
(43) Date de publication de la demande: 06.05.2009
(73) Titulaire: Peugeot Citroën Automobiles SA, 78140 Vélizy-Villacoublay (FR)
(72) Inventeur: Lelasseux, Xavier, 92150 Suresnes (FR)

(56) Documents cités:
- EP-A- 1 243 788
- FR-A- 2 841 956
- GB-A- 492 003

## Description

. L'invention concerne une boîte de vitesses à double synchroniseur conforme à la revendication 1, des procédés de changement de rapport montant et descendant associés conforme aux revendications 14 et 10, et un véhicule, comportant une telle boîte de vitesses, selon la revendication 19. L'invention a notamment pour but d'améliorer le ressenti des changements de rapport de la boîte de vitesses en évitant les ruptures de couple.

. L'invention trouve une application particulièrement avantageuse dans le domaine des boîtes de vitesses manuelles pilotées (BVMP) utilisées entre un dispositif de propulsion, tel qu'un moteur thermique ou une machine électrique, et un organe à entraîner, tel que des roues de véhicule automobile ou de moto.

. Les véhicules automobiles connus comportent une chaîne de traction formée par un dispositif de propulsion (comportant un moteur thermique et/ou une machine électrique), un embrayage, et une boîte de vitesses qui entraîne les roues. L'embrayage est relié d'une part au dispositif de propulsion et d'autre part à la boîte de vitesses, elle-même reliée aux roues du véhicule.

. Plus précisément, la boîte de vitesses comporte un arbre primaire relié à l'embrayage et un arbre secondaire relié aux roues du véhicule, ces deux arbres étant reliés angulairement entre eux par l'intermédiaire d'engrenages formant les rapports de vitesse.

. Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer un changement de rapport.

. A cet effet, le manchon est lié en rotation à son arbre mais est mobile axialement pour permettre l'accrochage avec le pignon fou. On parle de crabotage lorsque le manchon entre en coopération avec un pignon fou de sorte qu'un rapport de vitesse est engagé, et de décrabotage lorsque le manchon se dégage du pignon fou de sorte que le rapport est désengagé.

. Les boîtes de vitesses à crabots classiques présentent l'inconvénient de générer une rupture de couple pendant le changement de rapport. La durée de la rupture de couple est liée aux étapes de coupure des gaz, débrayage, passage de vitesse, embrayage et remise des gaz, mais aussi au temps de synchronisation qui découle de la nécessité de rendre compatibles les vitesses de rotation des arbres de la boîte de vitesses.

. Le document EP1243788, qui représente l'état de la technique le plus proche, décrit une boîte de vitesses comportant : un arbre primaire destiné à être relié à un moteur thermique, et un arbre secondaire destiné à être relié aux roues du véhicule, ces deux arbres étant liés angulairement entre eux par des engrenages formant les rapports de vitesse, ces engrenages comportant chacun une roue solidaire en rotation d'un des arbres et un pignon fou monté sur l'autre arbre qui engrènent entre eux, et des manchons de crabotage associables chacun à deux pignons fous, ces manchons de crabotage assurant le changement des rapports de vitesse, les pignons fous étant rassemblés par paires avec un seul manchon de crabotage par paire, le manchon de crabotage d'une paire engageant l'un des deux pignons fous de la paire par déplacement dans une direction et l'autre pignon fou par déplacement dans l'autre direction, ces paires de pignons fous étant montées soit sur l'arbre primaire soit sur l'arbre secondaire.

. Le document FR-2841956 décrit une boîte de vitesses comportant un rapport de première monté sur un système de roue libre, de sorte que le changement de rapport peut être effectué sous couple pour passer de la première à la deuxième. Toutefois un tel système ne permet pas d'effectuer tous les changements de rapport sous couple.

. L'invention se propose notamment de résoudre le problème de rupture de couple pour tous les changements de rapport de vitesse.

. A cette fin, l'invention met en oeuvre un double synchroniseur composé d'un premier et un deuxième synchroniseurs qui sont de préférence indépendants des manchons de crabotage.

. Le premier synchroniseur est associé à un rapport élevé de la boîte de vitesses. Par rapport élevé, on entend un des deux derniers rapports de la boîte de vitesses. Ainsi, pour une boîte à six rapports, le premier synchroniseur est fixé au rapport de cinquième ou de sixième.

. Toutefois de préférence, le premier synchroniseur est associé au rapport le plus élevé de la boîte de vitesses, afin de pouvoir obtenir une réduction de la vitesse de l'arbre primaire sur tous les rapports. Par exemple, dans une boîte de vitesses à six rapports, le premier synchroniseur est fixé au rapport de sixième.

. Tandis que le deuxième synchroniseur est associé à un rapport intermédiaire autre que la première et la marche arrière, afin de combler les ruptures de couple pour les rapports inférieurs. Dans l'exemple de la boîte de vitesses à six rapports, le deuxième synchroniseur est par exemple associé au rapport de troisième.

. En variante, le premier synchroniseur est associé au rapport juste inférieur au rapport maximal, tandis que le deuxième synchroniseur est associé avec n'importe quel autre rapport pourvu que ces deux rapports soient séparés au moins d'une vitesse.

. De préférence, les synchroniseurs sont positionnés entre deux pignons fous montés sur un même arbre, de sorte que les manchons de crabotage de ces pignons sont placés de l'autre coté de ces pignons. Ainsi, chacun des deux pignons fous a d'un coté son organe de crabotage et de l'autre un organe de synchronisation.

. Lors des changements de rapport montants effectués dans la plage comprise entre le rapport de première et le rapport intermédiaire associé au deuxième synchroniseur, on transmet du couple aux roues soit via le deuxième synchroniseur seul, soit via le premier et le deuxième synchroniseurs. Dans l'exemple de la boîte de vitesses à six rapports, lors des changements de rapport du type 1-2, 2-3 ou 1-3, on transmet du couple aux roues soit via le synchroniseur de troisième seul, soit via les synchroniseurs de troisième et de sixième.

. Tandis que lors des changements de rapport montants effectués dans la plage comprise entre le rapport associé au deuxième synchroniseur et le rapport maximal, on transmet du couple aux roues uniquement via le premier synchroniseur. Dans l'exemple de la boîte à six rapports, lors des changements de rapport 3-4, 3-5, 3-6, 4-5, 4-6 et 5-6, on transmet du couple aux roues uniquement via le synchroniseur de sixième.

. Lors des changements de rapport montants avec saut du rapport intermédiaire associé au deuxième synchroniseur, soit le premier synchroniseur est utilisé seul, soit le deuxième synchroniseur est utilisé jusqu'à ce que la vitesse équivalente du rapport intermédiaire soit atteinte puis le premier synchroniseur est alors utilisé, soit les deux synchroniseurs sont utilisés et une roue libre associée au synchroniseur du rapport intermédiaire déconnecte ce synchroniseur dès que la vitesse équivalente correspondant à ce rapport est atteinte.

. Dans l'exemple de la boîte à six rapports, pour des changements du type 2-4 ou 1-4, soit le synchroniseur de sixième est utilisé seul, soit le synchroniseur de troisième est utilisé jusqu'à ce que la vitesse équivalente du rapport de troisième est atteinte puis le synchroniseur de sixième est alors utilisé, soit les deux synchroniseurs de troisième et de sixième sont utilisés et une roue libre sur le synchroniseur de troisième déconnecte le synchroniseur de troisième dès que la vitesse équivalente correspondant au rapport de troisième est atteinte.

. Dans une réalisation, les synchroniseurs agissent simultanément sur les pignons auxquels ils sont associés de manière à les synchroniser à l'arbre secondaire. Les démultiplications étant différentes entre les deux pignons associés aux synchroniseurs (pignon du rapport intermédiaire et pignon du rapport maximal), cette réalisation ne fonctionne de manière optimale que dans certaines conditions initiales de vitesse de l'arbre.

. En effet, dans le cas où le rapport engagé est inférieur ou égal au rapport associé au deuxième synchroniseur, le fait de passer du couple simultanément via les deux rapports permet de réduire la vitesse de l'arbre primaire. Dans l'exemple de la boîte à 6 rapports, lors d'un changement de rapport 1-2, 1-3 ou 2-3, le fait d'actionner les synchroniseurs de troisième et de sixième permet de réduire la vitesse de l'arbre primaire. Il n'y a donc pas de problème dans ce cas de figure.

. En revanche, si le rapport précédemment engagé est compris entre le rapport intermédiaire associé au deuxième synchroniseur et le rapport maximal, le synchroniseur du rapport maximal aura tendance à faire chuter le régime tandis que le synchroniseur du rapport intermédiaire aura tendance à le faire augmenter de manière opposée. Dans l'exemple de la boîte de vitesses à 6 rapports, si le rapport précédemment engagé est compris entre la troisième et la sixième, le synchroniseur de sixième aura tendance à faire chuter le régime tandis que le synchroniseur de troisième aura tendance à le faire augmenter de manière opposée.

. Pour résoudre ce problème, on implante une roue libre entre le pignon du rapport intermédiaire et le synchroniseur qui lui est associé, de sorte que le couple du synchroniseur du rapport intermédiaire n'est transmis au pignon que lorsque la vitesse du pignon du rapport intermédiaire est inférieure à celle de l'arbre primaire. Dans l'exemple de la boîte à six rapports, la roue libre est implantée entre le pignon et le synchroniseur du rapport de troisième.

. Toutefois même sans roue libre, il serait possible d'utiliser simultanément les synchroniseurs du rapport intermédiaire et du rapport maximal pour passer du couple aux roues. Dans ce cas, le synchroniseur du rapport maximal est de préférence dimensionné pour transmettre plus de couple aux roues que le synchroniseur du rapport intermédiaire.

. Lors des changements de rapport descendants, les synchroniseurs ne servent pas à réduire la vitesse, mais à transmettre du couple aux roues pendant que le régime de l'arbre primaire augmente jusqu'au régime cible sous l'action du couple transmis par l'embrayage.

. Lors des changements de rapport descendants effectués dans la plage comprise entre le rapport maximal et le rapport intermédiaire associé au deuxième synchroniseur, seul le synchroniseur du rapport maximal est utilisé pour transmettre du couple aux roues. Ainsi dans l'exemple de la boîte à 6 rapports, pour des changements de rapport 6-5, 5-4, 4-3, 6-4, 6-3 et 5-3, seul le synchroniseur de sixième est utilisé.

. Lors des changements de rapports descendants effectués dans la plage comprise entre le rapport intermédiaire associé au deuxième synchroniseur et le rapport de première, le synchroniseur du rapport intermédiaire peut être utilisé seul ou avec le synchroniseur du rapport maximal. Ainsi, dans l'exemple de la boîte à six rapports, pour des changements de rapport 3-2, 3-1 et 2-1, le synchroniseur de troisième peut être utilisé seul ou avec le synchroniseur de sixième.

. Lors des changements de rapport descendants effectués avec saut du rapport intermédiaire, soit on utilise les deux synchroniseurs et une roue libre qui déconnecte le synchroniseur du rapport intermédiaire lorsque la vitesse de l'arbre primaire devient supérieure à la vitesse correspondant à ce rapport, soit on utilise uniquement le synchroniseur du rapport maximal, soit on utilise le synchroniseur du rapport maximal puis le synchroniseur du rapport intermédiaire.

. Dans l'exemple de la boîte à six rapports, lors les changements de rapport montants avec saut du rapport de troisième du type 4-2, 4-1, 5-2, 5-1, 6-2, 6-1, soit on utilise les deux synchroniseurs avec enclenchement automatique de la roue libre du synchroniseur de troisième lorsque le régime de l'arbre primaire est inférieur au régime de troisième, soit on n'utilise que le synchroniseur de sixième soit on utilise le synchroniseur de sixième puis le synchroniseur de troisième.

. Il est bien évident que dans la mesure du possible, les deux synchroniseurs sont utilisés en même temps de manière à combler le plus possible les ruptures du couple transmis à la roue lors du changement de vitesses afin de réduire la variation de couple.

. Toutefois dans certains cas on choisit d'utiliser uniquement un des deux synchroniseurs, le choix du synchroniseur étant effectué en fonction du niveau de couple à transmettre lors du changement de rapport.

. L'invention peut être mise en oeuvre avec des crabots classiques, des crabots bi-étages ou des crabots auto-éjecteurs montés sur tous les rapports.

. L'invention concerne donc une boîte de vitesses de type manuelle pilotée comportant :
- un arbre primaire destiné à être relié à un moteur thermique, et un arbre secondaire destiné à être relié aux roues du véhicule, ces deux arbres étant liés angulairement entre eux par des engrenages formant les rapports de vitesse,
- ces engrenages comportant chacun une roue solidaire en rotation d'un des arbres et un pignon fou monté sur l'autre arbre qui engrènent entre eux, et
- des manchons de crabotage associables chacun à deux pignons fous, ces manchons de crabotage assurant le changement des rapports de vitesse,
   **caractérisée en ce qu**'elle comporte en outre :
- un premier synchroniseur associé à un rapport élevé et un deuxième synchroniseur associé à un rapport intermédiaire autre que la première et la marche arrière.

. Selon une réalisation, le premier synchroniseur est associé au rapport de vitesse le plus élevé de la boîte de vitesses.

. Selon une réalisation, les pignons fous sont rassemblés par paires avec un seul manchon de crabotage par paire, le manchon de crabotage d'une paire engageant l'un des deux pignons fous de la paire par déplacement dans une direction et l'autre pignon fou par déplacement dans l'autre direction, ces paires de pignons fous étant montées soit sur l'arbre primaire soit sur l'arbre secondaire.

. Selon une réalisation, la boîte de vitesses comporte au moins quatre rapports, le premier synchroniseur étant associé au rapport le plus élevé, le deuxième synchroniseur étant associé au rapport intermédiaire.

. Selon une réalisation, la boîte de vitesses comporte six rapports, le premier synchroniseur étant associé au rapport de sixième et le deuxième synchroniseur étant associé au rapport de troisième.

. Selon une réalisation, les synchroniseurs sont positionnés entre le pignon fou du rapport maximal et le pignon fou du rapport intermédiaire montés sur un même arbre, de sorte que chacun de ces pignons présente d'un côté un manchon de crabotage et de l'autre un synchroniseur.

. Selon une réalisation, les synchroniseurs sont intégrés à l'intérieur d'un seul synchroniseur double, ce synchroniseur double assurant la synchronisation du pignon fou du rapport maximal lorsqu'il est déplacé axialement dans une direction et la synchronisation du pignon fou du rapport intermédiaire lorsqu'il est déplacé axialement dans l'autre direction.

. Selon une réalisation, les synchroniseurs sont actionnables simultanément par un dispositif de commande qui exerce simultanément une force sur les deux synchroniseurs lorsqu'il est actionné.

. Selon une réalisation, là boîte de vitesses comporte une roue libre positionnée entre le synchroniseur du rapport intermédiaire et le pignon fou de ce rapport, de sorte que le synchroniseur du rapport intermédiaire est déconnecté du pignon de ce rapport lorsque la vitesse de l'arbre primaire est inférieure à celle correspondant à ce rapport.

. Selon une réalisation, les synchroniseurs sont des synchroniseurs de type « Borg Warner » ou « New Process » de grande capacité énergétique, ou des embrayages de type multidisques humides, multicônes, ou des embrayages secs.

. L'invention concerne en outre un procédé de changement de rapport de vitesses montant avec couple positif pour passer d'un rapport initial à un rapport final, ce procédé mettant en oeuvre la boîte de vitesses définie selon l'invention et comportant les étapes suivantes :
- ouvrir l'embrayage de manière à le mettre à la limite du couple fourni par le moteur thermique,
- actionner le ou les synchroniseurs de manière à réduire progressivement le couple transmis par le rapport initial jusqu'au couple nul,
- piloter le régime de l'arbre primaire jusqu'à atteindre sensiblement le régime du rapport final à engager par action sur le ou les synchroniseurs,
- engager le rapport final,
- réduire progressivement le couple transmis par le ou les synchroniseurs, de sorte que tout le couple soit transmis aux roues par le rapport final, et
- fermer progressivement l'embrayage.

. Selon une mise en oeuvre, lors des passages montants effectués dans la plage comprise entre le rapport de première et le rapport intermédiaire associé au deuxième synchroniseur, on actionne soit le deuxième synchroniseur seul, soit le premier et le deuxième synchroniseurs ensemble.

. Selon une mise en oeuvre, lors des passages montants effectués dans la plage comprise entre le rapport associé au deuxième synchroniseur et le rapport maximal, on actionne uniquement le premier synchroniseur.

. Selon une mise en oeuvre, lors des changements de rapport montants avec saut du rapport intermédiaire associé au deuxième synchroniseur, soit le premier synchroniseur est utilisé seul, soit le deuxième synchroniseur est utilisé jusqu'à ce que la vitesse équivalente du rapport intermédiaire soit atteinte puis le premier synchroniseur est utilisé, soit les deux synchroniseurs sont utilisés et une roue libre associée au deuxième synchroniseur déconnecte ce synchroniseur dès que la vitesse équivalente de l'arbre primaire correspondant au rapport intermédiaire est atteinte.

. L'invention concerne en outre un procédé de changement de rapport de vitesses descendant avec couple positif pour passer d'un rapport initial à un rapport final, ce procédé mettant en oeuvre la boîte de vitesses définie selon l'invention et comportant les étapes suivantes :
- ouvrir l'embrayage de manière à le mettre à la limite du couple fourni par le moteur thermique,
- accélérer le moteur thermique jusqu'à ce que l'arbre primaire atteigne sensiblement le régime du rapport final à engager,
- actionner le ou les synchroniseurs de manière à réduire progressivement le couple transmis par le rapport initial,
- dégager le rapport initial,
- actionner le ou les synchroniseurs de manière à réduire progressivement le couple transmis via ces synchroniseurs, la réduction du couple étant commandée de manière à augmenter le régime de l'arbre primaire jusqu'au régime du rapport final à engager,
- engager le rapport final,
- réduire progressivement le couple transmis par le ou les synchroniseurs de manière que tout le couple soit transmis aux roues par le rapport engagé, et
- fermer progressivement l'embrayage.

. Selon une mise en oeuvre, lors des changements de rapport descendants effectués dans la plage comprise entre le rapport maximal et le rapport intermédiaire associé au deuxième synchroniseur, seul le premier synchroniseur est utilisé.

. Selon une mise en oeuvre, lors des changements de rapports descendants effectués dans la plage comprise entre le rapport intermédiaire associé au deuxième synchroniseur et la première, le deuxième synchroniseur peut être utilisé seul ou avec le premier synchroniseur.

. Selon une mise en oeuvre, lors des changements de rapport descendants effectués avec saut du rapport intermédiaire, soit on utilise uniquement le premier synchroniseur, soit on utilise le premier synchroniseur puis le deuxième synchroniseur, soit on utilise les deux synchroniseurs et une roue libre qui déconnecte le deuxième synchroniseur lorsque la vitesse de l'arbre primaire devient supérieure à la vitesse correspondant à ce rapport.

. Selon une mise en oeuvre, l'utilisation du synchroniseur dépend du niveau de couple à transmettre lors du changement de rapport, le premier synchroniseur étant utilisé pour les changements de rapport à faible couple, le deuxième synchroniseur étant utilisé pour les changements de rapport à couple élevé.

. L'invention concerne en outre un véhicule automobile comportant une boîte de vitesses définie selon l'invention.

. L'invention sera mieux comprise à la lecture de la description qui suit et à l'examen des figures qui l'accompagnent. Ces figures ne sont données qu'à titre illustratif mais nullement limitatif de l'invention. Elles montrent :

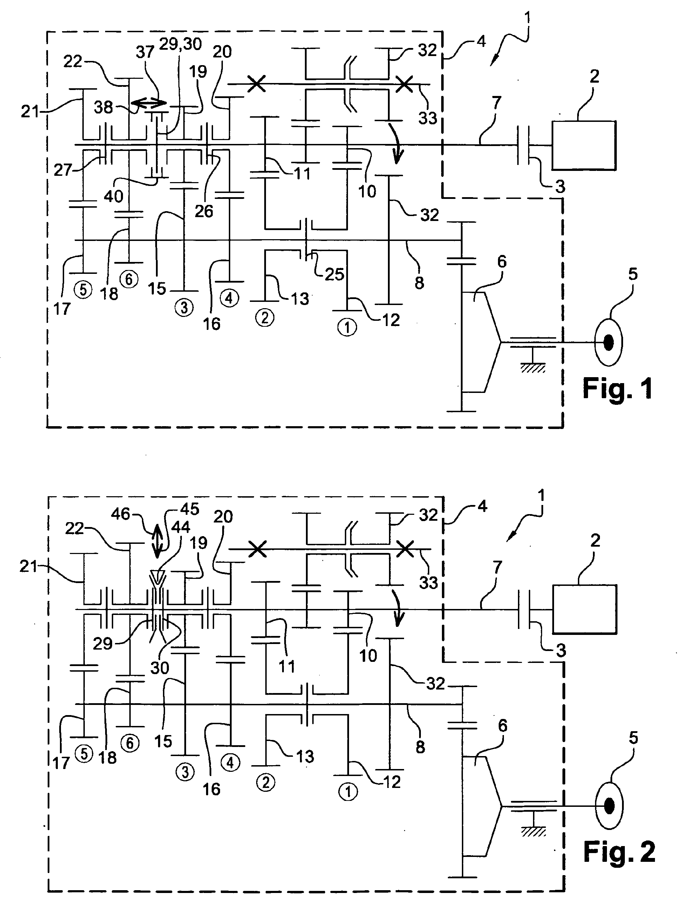

. figure 1 : une représentation schématique d'une chaîne de traction comportant une boîte de vitesses à 6 rapports selon l'invention munie de synchroniseurs sur deux de ses rapports ;

. figure 2 : une représentation schématique d'une chaîne de traction comportant une boîte de vitesses à 6 rapports selon l'invention munie de synchroniseurs actionnables simultanément ;

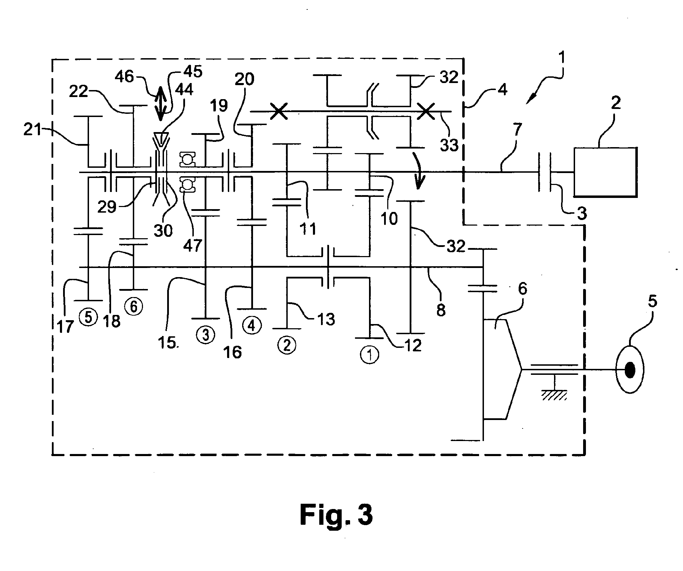

. figure 3 : une représentation schématique d'une variante de la réalisation de la figure 2 dans laquelle une roue libre est montée entre le synchroniseur du rapport intermédiaire et ce rapport intermédiaire.

. Les éléments identiques conservent la même référence d'une figure à l'autre.

. La figure 1 montre une chaîne 1 de traction d'un véhicule automobile formée par un moteur 2 thermique, un embrayage 3, une boîte 4 de vitesses délimitée par une ligne fermée discontinue, et des axes de sortie du différentiel vers les roues 5. L'embrayage 3 est relié d'une part au moteur 2 thermique et d'autre part à la boîte 4 de vitesses. Le différentiel 6 assure la liaison entre l'arbre secondaire 8 et les roues 5 du véhicule.

. En variante, la chaîne 1 de traction est complétée par une machine électrique (non représentée) positionnée sur l'arbre d'entrée de la boîte 4 de vitesse entre l'embrayage 3 et la boîte 4 de vitesses.

. Plus précisément, la boîte 4 de vitesses comporte un arbre 7 primaire relié à l'embrayage 3 et un arbre 8 secondaire relié aux roues 5.

. Ces deux arbres 7 et 8 sont reliés angulairement entre eux par l'intermédiaire d'engrenages formant les rapports de vitesse 1 à 6 entourés sur la figure. Les rapports de première, et de deuxième sont formés chacun par une roue 10-11 liée à l'arbre 7 primaire et un pignon fou 12-13 lié à l'arbre 8 secondaire. Tandis que les rapports de troisième, quatrième, cinquième et sixième sont formés chacun par une roue 15-18 liée à l'arbre 8 secondaire et un pignon fou 19-22 lié à l'arbre 7 primaire.

. Ces rapports de vitesses sont rassemblés par paire avec un seul manchon de crabotage 25-27 par paire. Ainsi le manchon 25 monté sur l'arbre 8 secondaire est positionné entre les rapports de première et de deuxième. Tandis que les manchons 26 et 27 montés sur l'arbre 7 primaire sont respectivement positionnés entre les rapports de troisième et quatrième, et entre les rapports de cinquième et de sixième.

. Chaque manchon 25-27 est lié en rotation sur l'arbre sur lequel il est monté et mobile axialement suivant l'axe de cet arbre. Chaque manchon 25-27 engage l'un des deux pignons fous entre lesquels il se situe par déplacement dans une direction et l'autre pignon par déplacement dans l'autre direction. A cet effet, chaque manchon 25-27 comporte une couronne de crabots destinés à entrer en coopération avec des crabots associés aux pignons fous.

. En outre, un premier synchroniseur 29 est fixé au rapport le plus élevé, ici le rapport de sixième. Tandis qu'un deuxième synchroniseur 30 est fixé sur le rapport de troisième.

. Ces synchroniseurs 29, 30 ont pour rôle d'éviter les ruptures de couple lors de ces changements de rapport. A cet effet, chacun de ces synchroniseurs 29, 30 est apte à assurer par frottement une liaison mécanique entre l'arbre sur lequel il est monté et le pignon fou auquel il est associé, de manière à transmettre du couple aux roues pendant le changement de rapport.

. Ces synchroniseurs 29, 30 sont positionnés entre le pignon fou du rapport de sixième et le pignon fou du rapport de troisième, de sorte que chacun de ces pignons présente d'un côté un manchon de crabotage et de l'autre un synchroniseur. Ainsi, le pignon fou 22 du rapport de sixième présente d'un côté le manchon 27 et de l'autre le synchroniseur 29. Tandis que le pignon fou 19 du rapport de troisième présent d'un coté le manchon 26 et de l'autre le synchroniseur 30.

. Ces synchroniseurs 29, 30 sont intégrés dans un seul synchroniseur double 29, 30 déplacé axialement au moyen d'une seule fourchette 40. Lorsque ce synchroniseur double est déplacé dans la direction 37 par la fourchette 40, le synchroniseur 30 entre en frottement contre le pignon 19 du rapport de troisième, tandis que le synchroniseur 29 s'éloigne du pignon 22 du rapport de sixième. Lorsque le synchroniseur double est déplacé dans la direction 38 par la fourchette 40, le synchroniseur 29 entre en frottement contre le pignon 22 du rapport de sixième, tandis que le synchroniseur 30 s'éloigne du pignon 19 du rapport de troisième.

. En variante, les synchroniseurs 29, 30 sont actionnables séparément par deux fourchettes indépendantes. Un tel mode de réalisation permet d'actionner les deux synchroniseurs 29, 30 en même temps afin de transmettre un maximum de couple aux roues.

. La boîte de vitesses 4 comporte en outre un ensemble de pignons 32 montés sur un arbre 33 parallèle aux arbres 7, 8 primaire et secondaire qui assure l'engagement de la marche arrière en inversant le sens de rotation des roues 5.

. En variante, la boîte de vitesses 4 comporte plus ou moins de six rapports et le synchroniseur 30 est associé à un rapport inférieur ou supérieur au rapport de troisième.

. La figure 2 montre une variante de réalisation dans laquelle les deux synchroniseurs 29, 30 sont actionnables simultanément au moyen d'un dispositif de commande 44 qui exerce simultanément une force sur les synchroniseurs 29, 30 de troisième et de sixième.

. A cet effet, le dispositif de commande 44 présente en coupe une forme triangulaire et est positionné entre les deux synchroniseurs 29, 30.

. Lorsque le dispositif de commande 44 est déplacé radialement en direction de l'arbre 7, il a tendance à écarter les deux synchroniseurs 29, 30 l'un de l'autre, de sorte que les deux synchroniseurs 29, 30 entrent simultanément en contact avec les pignons 19, 22 des rapports de troisième et de sixième.

. Lorsque le dispositif de commande 44 est déplacé radialement dans une direction opposée à l'arbre 7, les deux synchroniseurs 29, 30 sont rapprochés l'un de l'autre par une force de rappel (par exemple exercée par un ressort), de sorte qu'ils n'exercent plus de force de frottement contre les pignons 19, 22 de troisième et de sixième.

. Comme représenté sur la figure 3, une roue libre 47 peut être implantée entre le pignon fou 19 de troisième et le synchroniseur 30.

. Lorsque le synchroniseur 30 est actionné contre le pignon fou 19 de troisième et tant que la vitesse de l'arbre primaire 7 est supérieure à la vitesse de ce pignon fou 19, la roue libre 47 connecte le synchroniseur 30 au pignon fou 19 de sorte que le synchroniseur 30 transmet du couple aux roues 5. Et dès que la vitesse de l'arbre primaire 7 est inférieure à la vitesse du pignon fou 19 de troisième, la roue libre 47 déconnecte le synchroniseur 30 du pignon fou 19 de troisième de sorte que le synchroniseur 30 ne transmet plus de couple aux roues 5.

. Les synchroniseurs 29, 30 utilisés peuvent être par exemple des synchroniseurs classiques, par exemple de type « Borg Warner » ou « New Process », de grande capacité énergétique, mais aussi des embrayages de type multidisques humides, ou même des embrayages secs.

. Lors d'un changement de rapport montant du rapport N vers le rapport N+1 sous couple moteur (« tirage »), on met en en oeuvre les étapes décrites ci-après.

. Dans une première étape, le manchon associé au rapport N et le manchon associé au rapport N+1 étant respectivement craboté et décraboté, l'embrayage 3 est ouvert de manière à être à la limite du couple fourni par le moteur 2 thermique.

. Dans une deuxième étape, le ou les synchroniseurs 29, 30 sont progressivement actionnés de façon à diminuer la vitesse de l'arbre primaire 7 et à transmettre un couple de dérivation aux roues 5.

. Pour des changements de rapport effectués dans la plage comprise entre le rapport de première et le rapport de troisième, soit le synchroniseur 30 de troisième est actionné seul, soit les synchroniseurs 29, 30 de troisième et de sixième sont actionnés ensemble.

. Pour des changements de rapport effectués dans la plage comprise entre le rapport de troisième et le rapport de sixième, le synchroniseur 29 seul est actionné.

. Pour des changements de rapport avec saut du rapport de troisième, le premier synchroniseur 29 est actionné seul. En variante, avec la réalisation de la figure 1, le deuxième synchroniseur 30 est actionné jusqu'à ce que la vitesse équivalente du rapport de troisième soit atteinte puis le premier synchroniseur 29 est utilisé. En variante, avec la réalisation de la figure 3, les deux synchroniseurs sont utilisés et la roue libre 47 associée au synchroniseur 30 de troisième déconnecte ce synchroniseur dès que la vitesse équivalente correspondant au rapport de troisième est atteinte.

. Dans une troisième étape, l'arbre 7 primaire est piloté jusqu'à atteindre sensiblement le régime du rapport final N+1 à engager par action sur le ou les synchroniseurs 29, 30.

. Dans une quatrième étape le rapport final N+1 est engagé par crabotage.

. Dans une cinquième étape, le couple transmis par le ou les synchroniseurs 29, 30 est réduit progressivement, de sorte que tout le couple soit transmis aux roues 5 par le rapport final N+1.

. Dans une sixième étape, l'embrayage 3 est fermé progressivement.

. On remarque que d'une part, un couple de dérivation a été transmis par le ou les synchroniseurs 29, 30 pendant le changement de rapport, et d'autre part, que ce couple de dérivation appliqué a permis d'égaliser les vitesses de rotation du manchon et du pignon correspondant au rapport cible, évitant ainsi le choc de crabotage.

. En outre, il est possible d'effectuer des changements de rapport de type descendant sous couple (« kick down ») du rapport N au rapport N-1 grâce aux synchroniseurs 29, 30. Ce changement de rapport est effectué suivant la séquence décrite ci-après.

. Dans une première étape, l'embrayage 3 est mis en phase de glissement de manière à être à la limite du couple fourni par le moteur 2 thermique.

. Dans une deuxième étape, le moteur 2 thermique est accéléré jusqu'à ce que l'arbre primaire 7 atteigne sensiblement le régime du rapport final N-1 à engager.

. Dans une troisième étape, le ou les synchroniseurs 29, 30 sont actionnés de manière à réduire le couple transmis par le rapport initial N. Dans un exemple le ou les synchroniseurs 29, 30 sont actionnés, de sorte que moins de 50% du couple transmis passe par le rapport initial N.

. Dans une quatrième étape, le rapport initial N est dégagé, le couple étant alors transmis aux roues 5 via le rapport associé au ou aux synchroniseurs 29, 30 actionnés.

. Dans une cinquième étape, le ou les synchroniseurs 29, 30 sont actionnés de manière à réduire progressivement le couple transmis via ces synchroniseurs 29, 30. La réduction du couple transmis par les synchroniseurs 29, 30 est effectuée de sorte que le régime de l'arbre primaire 7 augmente jusqu'au régime cible. En effet, lorsqu'on réduit le couple transmis par le ou les synchroniseurs 29, 30, le régime de l'arbre primaire 7 augmente car cet arbre 7 est en équilibre entre le couple transmis par l'embrayage 3 et le couple transmis par le ou les synchroniseurs 29, 30.

. Dans une sixième étape, le rapport final N-1 est engagé en crabotant le manchon qui lui est associé.

. Dans une septième étape, le couple transmis par le ou les synchroniseurs 29, 30 est réduit progressivement jusqu'à un couple nul de manière que tout le couple soit transmis aux roues 5 par le rapport engagé.

. Dans une huitième étape, l'embrayage 3 est fermé progressivement.

. Pour des changements de rapport descendants effectués dans la plage comprise entre le rapport de sixième et le rapport de troisième, seul le premier synchroniseur 29 est utilisé.

. Pour des changements de rapports descendants effectués dans la plage comprise entre le rapport de troisième et la première, le deuxième synchroniseur 30 peut être utilisé seul ou avec le premier synchroniseur 29.

. Pour des changements de rapport descendants effectués avec saut du rapport de troisième, le premier synchroniseur 29 uniquement est utilisé. En variante, dans le mode de réalisation de la figure 1, le premier synchroniseur 29 est d'abord utilisé jusqu'à ce que le régime de l'arbre primaire 7 devienne supérieur à la vitesse correspondant au rapport de troisième puis le synchroniseur 30 du rapport de troisième est utilisé. En variante, dans le mode de réalisation de la figure 3, les deux synchroniseurs 29, 30 sont utilisés, la roue libre 47 déconnectant le synchroniseur 30 du rapport de troisième lorsque la vitesse de l'arbre primaire 7 est inférieure à la vitesse correspondant à ce rapport.

. Dans une mise en oeuvre, l'utilisation des synchroniseurs 29, 30 dépend du niveau de couple à transmettre lors du changement de rapport (couple élevé lors d'accélérations du véhicule élevées ou couple faible lors d'accélérations du véhicule faibles).

. Ainsi, le synchroniseur 30 positionné sur le plus petit rapport permet lors d'un changement de rapport, (1-2) par exemple, de transmettre plus de couple que le synchroniseur 29 positionné sur le rapport le plus élevé. Le synchroniseur 30 est donc de préférence utilisé pour des changements de rapport à couple élevé. Par couple élevé, on entend un couple compris entre 30 et 100% du couple maximal du moteur. Cette plage de valeurs est susceptible de varier en fonction du poids du véhicule.

. Toutefois, la précision du couple transmis par le synchroniseur 30 est plus faible qu'avec le synchroniseur 29 et le risque d'avoir des à-coups plus grands. Ce défaut acceptable pour des changements de rapport à couple élevé peut devenir gênant lors de changements de rapport à faible couple. Par faible couple, on entend un couple compris entre 0 et 70% du couple moteur maximal. Cette plage de valeurs est susceptible de varier en fonction du poids du véhicule.

. En conséquence, lors de ces passages à faible couple (pour lesquels le niveau de couple à transmettre lors du changement de rapport est plus faible), on utilise le synchroniseur 29 qui permet, à iso-couple sur l'organe, d'avoir un niveau de couple ressenti par le véhicule plus faible qu'avec le synchroniseur 30. Donc l'arbre primaire 7 atteindra rapidement sa vitesse cible mais avec un niveau de couple transmis à la roue plus faible que si le synchroniseur 30 était utilisé. On limite ainsi les à-coups même dans le cas où une erreur dans la mesure du couple dérivé via le synchroniseur est commise.

. L'information sur le niveau de couple est obtenue, soit de l'analyse de l'accélération du véhicule et/ou du moteur avant ou pendant le changement de rapport, soit par l'information sur le niveau de couple fourni par le moteur 2 lui-même. En fonction de ces paramètres et éventuellement du rapport engagé, du rapport cible et de la vitesse véhicule, on choisit soit l'un soit l'autre des synchroniseurs 29, 30.

## Revendications

1. Boîte (4) de vitesses de type manuelle pilotée comportant :
- un arbre (7) primaire destiné à être relié à un moteur (2) thermique, et un arbre (8) secondaire destiné à être relié aux roues (5) du véhicule, ces deux arbres (7, 8) étant liés angulairement entre eux par des engrenages formant les rapports de vitesse,
- ces engrenages comportant chacun une roue (10, 11, 15-18) solidaire en rotation d'un des arbres (7, 8) et un pignon fou (12, 13, 19-22) monté sur l'autre arbre qui engrènent entre eux, et
- des manchons (25-27) de crabotage associables chacun à deux pignons fous, ces manchons (25-27) de crabotage assurant le changement des rapports de vitesse, les pignons fous (12, 13-19-22) étant rassemblés par paires avec un seul manchon (25-27) de crabotage par paire, le manchon (25-27) de crabotage d'une paire engageant l'un des deux pignons fous de la paire par déplacement dans une direction et l'autre pignon fou par déplacement dans l'autre direction, ces paires de pignons fous étant montées soit sur l'arbre primaire (7) soit sur l'arbre secondaire (8).
**caractérisée en ce qu'**elle comporte en outre :
- un double synchroniseur distinct desdits manchons de crabotage, ledit double synchroniseur comprenant un premier synchroniseur (29) associé à un rapport de vitesse élevé et un deuxième synchroniseur (30) associé à un rapport de vitesse intermédiaire autre que la première et la marche arrière.

2. Boîte de vitesses selon la revendication 1, **caractérisée en ce que** le premier synchroniseur (29) est associé au rapport de vitesse le plus élevé de la boîte de vitesses.

3. Boîte de vitesses selon l'une des revendications 1 et 2, **caractérisé en ce qu'**elle comporte au moins quatre rapports, le premier synchroniseur (29) étant associé au rapport le plus élevé, le deuxième synchroniseur (30) étant associé au rapport intermédiaire.

4. Boîte de vitesses selon l'une des revendications 1 à 3, **caractérisée en ce qu'**elle comporte six rapports, le premier synchroniseur (29) étant associé au rapport de sixième et le deuxième synchroniseur (30) étant associé au rapport de troisième.

5. Boîte de vitesses selon l'une des revendications 1 à 4, **caractérisée en ce que** les synchroniseurs (29, 30) sont positionnés entre le pignon fou (22) du rapport maximal et le pignon fou (19) du rapport intermédiaire montés sur un même arbre (7), de sorte que chacun de ces pignons (19, 22) présente d'un côté un manchon (26, 27) de crabotage et de l'autre un synchroniseur (29, 30).

6. Boîte de vitesses selon la revendication 5, **caractérisée en ce que** les synchroniseurs (29, 30) sont intégrés à l'intérieur d'un seul synchroniseur double, ce synchroniseur double assurant la synchronisation du pignon fou (22) du rapport maximal lorsqu'il est déplacé axialement dans une direction et la synchronisation du pignon fou (19) du rapport intermédiaire lorsqu'il est déplacé axialement dans l'autre direction.

7. Boîte de vitesses selon la revendication 5, **caractérisée en ce que** les synchroniseurs sont actionnables simultanément par un dispositif de commande qui exerce simultanément une force sur les deux synchroniseurs (29, 30) lorsqu'il est actionné.

8. Boîte de vitesses selon la revendication 7, **caractérisée en ce qu'**elle comporte une roue libre (47) positionnée entre le synchroniseur (30) du rapport intermédiaire et le pignon fou (19) de ce rapport, de sorte que le synchroniseur (30) du rapport intermédiaire est déconnecté du pignon de ce rapport lorsque la vitesse de l'arbre primaire (7) est inférieure à celle correspondant à ce rapport.

9. Boîte de vitesses selon l'une des revendications 1 à 8, **caractérisée en ce que** les synchroniseurs (29, 30) sont des embrayages de type multidisques humides, multicônes, ou des embrayages secs.

10. Procédé de changement de rapport de vitesses montant avec couple positif pour passer d'un rapport initial (N) à un rapport final (N+1), ce procédé mettant en oeuvre la boîte (4) de vitesses définie selon l'une des revendications 1 à 9 et comportant les étapes suivantes :
- ouvrir l'embrayage (3) de manière à le mettre à la limite du couple fourni par le moteur (2) thermique,
- actionner le ou les synchroniseurs (29, 30) de manière à réduire progressivement le couple transmis par le rapport initial (N) jusqu'au couple nul,
- piloter le régime de l'arbre (7) primaire jusqu'à atteindre sensiblement le régime du rapport final (N+1) à engager par action sur le ou les synchroniseurs (29, 30),
- engager le rapport final (N+1),
- réduire progressivement le couple transmis par le ou les synchroniseurs (29, 30), de sorte que tout le couple soit transmis aux roues (5) par le rapport final (N+1), et
- fermer progressivement l'embrayage (3).

11. Procédé selon la revendication 10, **caractérisé en ce que** lors des passages montants effectués dans la plage comprise entre le rapport de première et le rapport intermédiaire associé au deuxième synchroniseur (30), on actionne soit le deuxième synchroniseur (30) seul, soit le premier et le deuxième synchroniseurs (29, 30) ensemble.

12. Procédé selon la revendication 10, **caractérisé en ce que** lors des passages montants effectués dans la plage comprise entre le rapport associé au deuxième synchroniseur (30) et le rapport maximal, on actionne uniquement le premier synchroniseur (29).

13. Procédé selon la revendication 10, **caractérisé en ce que** lors des changements de rapport montants avec saut du rapport intermédiaire associé au deuxième synchroniseur (30), soit le premier synchroniseur (29) est utilisé seul, soit le deuxième synchroniseur (30) est utilisé jusqu'à ce que la vitesse équivalente du rapport intermédiaire soit atteinte puis le premier synchroniseur (29) est utilisé, soit les deux synchroniseurs (29, 30) sont utilisés et une roue libre (47) associée au deuxième synchroniseur (30) déconnecte ce synchroniseur (30) dès que la vitesse équivalente de l'arbre primaire (7) correspondant au rapport intermédiaire est atteinte.

14. Procédé de changement de rapport de vitesses descendant avec couple positif pour passer d'un rapport initial (N) à un rapport final (N-1), ce procédé mettant en oeuvre la boîte (4) de vitesses définie selon l'une des revendications 1 à 9 et comportant les étapes suivantes :
- ouvrir l'embrayage (3) de manière à le mettre à la limite du couple fourni par le moteur (2) thermique,
- accélérer le moteur (2) thermique jusqu'à ce que l'arbre primaire (7) atteigne sensiblement le régime du rapport final (N-1) à engager,
- actionner le ou les synchroniseurs (29, 30) de manière à réduire progressivement le couple transmis par le rapport initial (N),
- dégager le rapport initial (N),
- actionner le ou les synchroniseurs (29, 30) de manière à réduire progressivement le couple transmis via ces synchroniseurs (29, 30), la réduction du couple étant commandée de manière à augmenter le régime de l'arbre primaire (7) jusqu'au régime du rapport final (N-1) à engager,
- engager le rapport final (N-1),
- réduire progressivement le couple transmis par le ou les synchroniseurs (29, 30) de manière que tout le couple soit transmis aux roues (5) par le rapport engagé (N-1), et
- fermer progressivement l'embrayage (3).

15. Procédé selon la revendication 14, **caractérisé en ce que** lors des changements de rapport descendants effectués dans la plage comprise entre le rapport maximal et le rapport intermédiaire associé au deuxième synchroniseur, seul le premier synchroniseur (29) est utilisé.

16. Procédé selon la revendication 14, **caractérisé en ce que** lors des changements de rapports descendants effectués dans la plage comprise entre le rapport intermédiaire associé au deuxième synchroniseur et la première, le deuxième synchroniseur (30) peut être utilisé seul ou avec le premier synchroniseur (29).

17. Procédé selon la revendication 14, **caractérisé en ce que** lors des changements de rapport descendants effectués avec saut du rapport intermédiaire, soit on utilise uniquement le premier synchroniseur (29), soit on utilise le premier synchroniseur (29) puis le deuxième synchroniseur (30), soit on utilise les deux synchroniseurs (29, 30) et une roue libre (47) qui déconnecte le deuxième synchroniseur (30) lorsque la vitesse de l'arbre primaire devient supérieure à la vitesse correspondant à ce rapport.

18. Procédé selon l'une des revendications 10 à 17, **caractérisé en ce que** l'utilisation des synchroniseurs (29, 30) dépend du niveau de couple à transmettre lors du changement de rapport, le premier synchroniseur (29) étant utilisé pour les changements de rapport à faible couple, le deuxième synchroniseur (30) étant utilisé pour les changements de rapport à couple élevé.

19. Véhicule automobile comportant une boîte de vitesses définie selon l'une des revendications 1 à 9.

## Claims

1. Gearbox (4) of the driven manual type comprising:
- a primary shaft (7) intended to be connected to a thermal motor (2) and a secondary shaft (8) intended to be connected to the wheels (5) of the vehicle, these two shafts (7, 8) being linked angularly to each other by gear-wheels forming the gear ratios,
- these gear-wheels each comprising a wheel (10, 11, 15-18) integral in rotation with one of the shafts (7, 8) and an idler gear (12, 13, 19-22) mounted on the other shaft, which mesh with each other, and
- dog clutch sleeves (25-27) each able to be associated with two idler gears, these dog clutch sleeves (25-27) ensuring the gear ratio changes, the idler gears (12, 13, 19-22) being assembled in pairs with a single dog clutch sleeve (25-27) per pair, the dog clutch sleeve (25-27) of one pair engaging one of the two idler gears of the pair by displacement in one direction and the other idler gear by displacement in the other direction, these pairs of idler gears being mounted either on the primary shaft (7) or on the secondary shaft (8)
**characterised in that** it further comprises:
- a double synchronizer distinct from the said dog clutch sleeves, the said double synchronizer comprising a first synchronizer (29) associated with a high gear ratio and a second synchronizer (30) associated with an intermediate gear ratio other than the first and the reverse gear.

2. Gearbox according to Claim 1, **characterized in that** the first synchronizer (29) is associated with the highest gear ratio of the gearbox.

3. Gearbox according to one of Claims 1 and 2, **characterized in that** it comprises at least four gear ratios, the first synchronizer (29) being associated with the highest gear ratio, the second synchronizer (30) being associated with the intermediate gear ratio.

4. Gearbox according to one of Claims 1 to 3, **characterized in that** it comprises six ratios, the first synchronizer (29) being associated with the sixth gear ratio, and the second synchronizer (30) being associated with the third gear ratio.

5. Gearbox according to one of Claims 1 to 4, **characterized in that** the synchronizers (29, 30) are positioned between the idler gear (22) of the maximum gear ratio and the idler gear (19) of the intermediate gear ratio mounted on the same shaft (7), such that each of these idler gears (19, 22) presents on one side a dog clutch sleeve (26, 27) and on the other a synchronizer (29, 30).

6. Gearbox according to Claim 5, **characterized in that** the synchronizers (29, 30) are integrated inside a sole double synchronizer, this double synchronizer ensuring the synchronization of the idler gear (22) of the maximum ratio when it is displaced axially in one direction and the synchronization of the idler gear (19) of the intermediate ratio when it is displaced axially in the other direction.

7. Gearbox according to Claim 5, **characterized in that** the synchronizers are able to be actuated simultaneously by means of a control device which exerts a force simultaneously on the two synchronizers (29, 30) when it is actuated.

8. Gearbox according to Claim 7, **characterized in that** it comprises a free wheel (47) positioned between the synchronizer (30) of the intermediate gear ratio and the idler gear (19) of this ratio, such that the synchronizer (30) of the intermediate ratio is disconnected from the idler gear of this ratio when the speed of the primary shaft (7) is less than that corresponding to this ratio.

9. Gearbox according to one of Claims 1 to 8, **characterized in that** the synchronizers (29, 30) are clutches of the wet multi-disc type, multi-cone, or dry clutches.

10. Upward gear-shifting method with positive torque to shift from an initial gear ratio (N) to a final gear ratio (N+1), this method using the gearbox (4) defined according to one of Claims 1 to 9 and comprising the following stages:
- opening the clutch (3) so as to place it at the limit of the torque provided by the thermal motor (2),
- actuating the synchronizer or synchronizers (29, 30) so as to progressively reduce the torque transmitted by the initial gear ratio (N) up to zero torque,
- driving the speed of the primary shaft (7) until substantially reaching the speed of the final gear ratio (N+1) to be engaged by action on the synchronizer or synchronizers (29, 30),
- engaging the final gear ratio (N+1),
- reducing progressively the torque transmitted by the synchronizer or synchronizers (29, 30), such that the whole torque is transmitted to the wheels (5) by the final gear ratio (N+1), and
- progressively closing the clutch (3).

11. Method according to Claim 10, **characterized in that** with the upward passages carried out in the range comprised between the first gear ratio and the intermediate gear ratio associated with the second synchronizer (30), either the second synchronizer (30) is actuated alone, or the first and the second synchronizers (29, 30) together.

12. Method according to Claim 10, **characterized in that** with the upward passages carried out in the range comprised between the gear ratio associated with the second synchronizer (30) and the maximum gear ratio, solely the first synchronizer (29) is actuated.

13. Method according to Claim 10, **characterized in that** with the upward gear ratio shifts with a jump of the intermediate gear ratio associated with the second synchronizer (30), either the first synchronizer (29) is used alone, or the second synchronizer (30) is used until the equivalent speed of the intermediate gear ratio is reached, then the first synchronizer (29) is used, or the two synchronizers (29, 30) are used and a free wheel (47) associated with the second synchronizer (30) disconnects this synchronizer (30) as soon as the equivalent speed of the primary shaft (7), corresponding to the intermediate gear ratio, is reached.

14. Downward gear-shifting method with positive torque to shift from an initial gear ratio (N) to a final gear ratio (N-1), this method using the gearbox (4) defined according to one of Claims 1 to 9 and comprising the following stages:
- opening the clutch (3) so as to place it at the limit of the torque provided by the thermal motor (2),
- accelerating the thermal motor (2) until the primary shaft (7) reaches substantially the speed of the final gear ratio (N-1) to be engaged,
- actuating the synchronizer or synchronizers (29, 30) so as to reduce progressively the torque transmitted by the initial gear ratio (N),
- disengaging the initial gear ratio (N),
- actuating the synchronizer or synchronizers (29, 30) so as to reduce progressively the torque transmitted via these synchronizers (29, 30), the reduction of the torque being controlled so as to increase the speed of the primary shaft (7) up to the speed of the final gear ratio (N-1) to be engaged,
- engaging the final gear ratio (N-1),
- reducing progressively the torque transmitted by the synchronizer or synchronizers (29, 30) so that the whole torque is transmitted to the wheels (5) by the engaged gear ratio (N-1), and
- closing progressively the clutch (3).

15. Method according to Claim 14, **characterized in that** with the downward gear ratio shifts carried out in the range comprised between the maximum gear ratio and the intermediate gear ratio associated with the second synchronizer, only the first synchronizer (29) is used.

16. Method according to Claim 14, **characterized in that** with the downward gear ratio shifts carried out in the range comprised between the intermediate gear ratio associated with the second synchronizer and the first, the second synchronizer (30) can be used alone or with the first synchronizer (29).

17. Method according to Claim 14, **characterized in that** with the downward gear ratio shifts carried out with a jump of the intermediate gear ratio, either the first synchronizer (29) is used alone, or the first synchronizer (29) is used then the second synchronizer (30), or the two synchronizers (29,30) are used and a free wheel (47) which disconnects the second synchronizer (30) when the speed of the primary shaft becomes greater than the speed corresponding to this gear ratio.

18. Method according to one of Claims 10 to 17, **characterized in that** the use of the synchronizers (29, 30) depends on the level of the torque to the transmitted on the gear ratio shift, the first synchronizer (29) being used for low-torque gear ratio shifts, the second synchronizer (30) being used for high-torque gear ratio shifts.

19. Automobile vehicle comprising a gearbox defined according to Claims 1 to 9.

## Patentansprüche

1. Schaltgetriebe (4) des manuellen gesteuerten Typs, Folgendes aufweisend:
- eine Hauptwelle (7), die dazu bestimmt ist, mit einem Verbrennungsmotor (2) verbunden zu werden, und eine Nebenwelle (8), die dazu bestimmt ist, mit den Rädern (5) des Fahrzeugs verbunden zu werden, wobei diese zwei Wellen (7, 8) untereinander winkelig durch Ritzel, die Gänge bilden, verbunden sind,
- wobei diese Ritzel jeweils ein Rad (10, 11, 15-18) aufweisen, das in Drehung mit einer der Wellen (7, 8) fest verbunden ist, und ein Freilaufrad (12, 13, 19-42), das auf die andere Welle montiert ist, die untereinander eingreifen, und
- Klauenkupplungsmuffen (25-27), die jeweils mit zwei Freilaufrädern verbunden werden können, wobei diese Klauenkupplungsmuffen (25-27) den Gangwechsel sicherstellen, wobei die Freilaufräder (12, 13-19-22) in Paaren mit einer einzigen Klauenkupplungsmuffe (25-27) vereint sind, wobei die Klauenkupplungsmuffe (25-27) eines Paares in eines der zwei Freilaufräder durch Bewegen in eine Richtung und in das andere Freilaufrad durch Bewegen in die andere Richtung eingreift, wobei diese Freilaufradpaare entweder auf die Hauptwelle (7) oder auf die Nebenwelle (8) montiert sind,
**dadurch gekennzeichnet, dass** es ferner Folgendes aufweist:
- eine doppelte Synchronisierungskupplungsnabe, die von den Klauenkupplungsmuffen getrennt ist, wobei die doppelte Synchronisierungskupplungsnabe eine erste Synchronisierungskupplungsnabe (29) aufweist, die zu einem hohen Gang gehört, und eine zweite Synchronisierungskupplungsnabe (30), die zu einem Zwischengang gehört, der nicht der erste Gang und nicht der Rückwärtsgang ist.

2. Schaltgetriebe nach Anspruch 1, **dadurch gekennzeichnet, dass** die erste Synchronisierungskupplungsnabe (29) zu dem höchsten Gang des Schaltgetriebes gehört.

3. Schaltgetriebe nach einem der Ansprüche 1 und 2, **dadurch gekennzeichnet, dass** es mindestens vier Gänge aufweist, wobei die erste Synchronisierungskupplungsnabe (29) zu dem höchsten Gang gehört, wobei die zweite Synchronisierungskupplungsnabe (30) zu dem Zwischengang gehört.

4. Schaltgetriebe nach einem der Ansprüche 1 bis 3, **dadurch gekennzeichnet, dass** es sechs Gänge aufweist, wobei die erste Synchronisierungskupplungsnabe (29) zu dem sechsten Gang gehört und die zweite Synchronisierungskupplungsnabe (30) zu dem dritten Gang gehört.

5. Schaltgetriebe nach einem der Ansprüche 1 bis 4, **dadurch gekennzeichnet, dass** die Synchronisierungskupplungsnaben (29, 30) zwischen dem Freilaufrad (22) des maximalen Gangs und dem Freilaufrad (19) des Zwischengangs auf eine gleiche Welle (7) derart montiert sind, dass jedes dieser Freilaufräder (19, 22) auf einer Seite eine Klauenkupplungsmuffe (26, 27) und auf der anderen eine Synchronisierungskupplungsnabe (29, 30) aufweist.

6. Schaltgetriebe nach Anspruch 5, **dadurch gekennzeichnet, dass** die Synchronisierungskupplungsnaben (29, 30) in das Innere einer einzigen doppelten Synchronisierungskupplungsnabe eingebaut sind, wobei diese doppelte Synchronisierungskupplungsnabe die Synchronisation des Freilaufrads (22) des höchsten Gangs sicherstellt, wenn sie axial in eine Richtung verstellt wird, und die Synchronisation des Freilaufrads (19) des Zwischengangs, wenn sie axial in die andere Richtung verstellt wird.

7. Schaltgetriebe nach Anspruch 5, **dadurch gekennzeichnet, dass** die Synchronisierungskupplungsnaben gleichzeitig durch eine Steuervorrichtung betätigt werden können, die gleichzeitig eine Kraft auf die zwei Synchronisierungskupplungsnaben (29, 30) ausübt, wenn sie betätigt wird.

8. Schaltgetriebe nach Anspruch 7, **dadurch gekennzeichnet, dass** es ein Freilaufrad (47) aufweist, das zwischen der Synchronisierungskupplungsnabe (30) des Zwischengangs und dem Freilaufrad (19) dieses Gangs derart positioniert ist, dass die Synchronisierungskupplungsnabe (30) des Zwischengangs von dem Ritzel dieses Gangs getrennt wird, wenn die Drehzahl der Hauptwelle (7) kleiner ist als die diesem Gang entsprechende.

9. Schaltgetriebe nach einem der Ansprüche 1 bis 8, **dadurch gekennzeichnet, dass** die Synchronisierungskupplungsnaben (29, 30) Kupplungen des Typs Mehrfachscheiben-Nasskupplung, Multikegelkupplungen oder Trockenkupplungen sind.

10. Verfahren zum Hochschalten von Gängen mit einem positiven Moment, um von einem ursprünglichen Gang (N) zu einem Endgang (N+1) überzugehen, wobei dieses Verfahren das Schaltgetriebe (4) umsetzt, das gemäß einem der Ansprüche 1 bis 9 definiert ist und die folgenden Schritte aufweist:
- Öffnen der Kupplung (3) derart, dass sie auf das Limit des von dem Verbrennungsmotor (2) gelieferten Moments gestellt wird,
- Betätigen der Synchronisierungskupplungsnabe(n) (29, 30) derart, dass das von dem ursprünglichen Gang (N) übertragene Moment allmählich bis zu einem Moment gleich null verringert wird,
- Steuern der Drehzahl der Hauptwelle (7) bis zum Erreichen im Wesentlichen der Drehzahl des einzurückenden Endgangs (N+1) und Einrücken durch Einwirken auf die Synchronisierungskupplungsnabe(n) (29, 30),
- Einrücken des Endgangs (N+1),
- allmähliches Verringern des von der/den Synchronisierungskupplungsnabe(n) (29, 30) übertragenen Moments derart, dass das ganze Moment auf die Räder (5) durch den Endgang (N+1) übertragen wird, und
- allmähliches Schließen der Kupplung (3).

11. Verfahren nach Anspruch 10, **dadurch gekennzeichnet, dass** man bei den Hochschaltungen, die in dem Bereich ausgeführt werden, der zwischen dem ersten Gang und dem Zwischengang, der zu der zweiten Synchronisierungskupplungsnabe (30) gehört, liegt, entweder die zweite Synchronisierungskupplungsnabe (30) allein oder die erste und zweite Synchronisierungskupplungsnabe (29, 30) gemeinsam betätigt.

12. Verfahren nach Anspruch 10, **dadurch gekennzeichnet, dass** man bei den Ganghochschaltungen, die in dem Bereich ausgeführt werden, der zwischen dem Gang, der zu der zweiten Synchronisierungskupplungsnabe (30) und dem maximalen Gang gehört, liegt, nur die erste Synchronisierungskupplungsnabe (29) betätigt.

13. Verfahren nach Anspruch 10, **dadurch gekennzeichnet, dass** bei Ganghochschaltungen mit Überspringen des Zwischengangs, der zu der zweiten Synchronisierungskupplungsnabe (30) gehört, entweder die erste Synchronisierungskupplungsnabe (29) allein verwendet wird oder die zweite Synchronisierungskupplungsnabe (30) verwendet wird, bis die Drehzahl erreicht ist, die dem Zwischengang entspricht, dann die erste Synchronisierungskupplungsnabe (29) verwendet wird oder die zwei Synchronisierungskupplungsnaben (29, 30) verwendet werden, und ein Freilaufrad (47), das zu der zweiten Synchronisierungskupplungsnabe (30) gehört, diese Synchronisierungskupplungsnabe (30) trennt, sobald die äquivalente Drehzahl der Hauptwelle (7), die dem Zwischengang entspricht, erreicht ist.

14. Verfahren zum Herunterschalten von Gängen mit positivem Moment, um von einem ursprünglichen Gang (N) auf einen Endgang (N-1) überzugehen, wobei dieses Verfahren das Schaltgetriebe (4) umsetzt, das gemäß einem der Ansprüche 1 bis 9 definiert ist und die folgenden Schritte aufweist:
- Öffnen der Kupplung (3) derart, dass sie auf das Limit des Moments, das von dem Verbrennungsmotor (2) geliefert wird, gestellt wird,
- Beschleunigen des Verbrennungsmotors (2), bis die Hauptwelle (7) im Wesentlichen die Drehzahl des einzurückenden Endgangs (N-1) erreicht,
- Betätigen der Synchronisierungskupplungsnabe(n) (29, 30) derart, dass das von dem ursprünglichen Gang (N) übertragene Moment allmählich verringert wird,
- Ausrücken des ursprünglichen Gangs (N),
- Betätigen der Synchronisierungskupplungsnabe(n) (29, 30) derart, dass das über diese Synchronisierungskupplungsnaben (29, 30) übertragene Moment allmählich verringert wird, wobei die Momentverringerung derart gesteuert wird, dass die Drehzahl der Hauptwelle (7) bis zu der Drehzahl es einzurückenden Endgangs (N-1) erhöht wird,
- Einrücken des Endgangs (N-1),
- allmähliches Verringern des Moments, das von der/den Synchronisierungskupplungsnabe(n) (29, 30) übertragen wird derart, dass das ganze Moment auf die Räder (5) von dem eingerückten Gang (N-1) übertragen wird, und
- allmähliches Schließen der Kupplung (3).

15. Verfahren nach Anspruch 14, **dadurch gekennzeichnet, dass** bei den Gangherunterschaltungen, die in dem Bereich ausgeführt werden, der zwischen dem maximalen Gang und dem Zwischengang, der zu der zweiten Synchronisierungskupplungsnabe gehört, liegt, nur die erste Synchronisierungskupplungsnabe (29) verwendet wird.

16. Verfahren nach Anspruch 14, **dadurch gekennzeichnet, dass** bei den Gangherunterschaltungen, die in dem Bereich ausgeführt werden, der zwischen dem Zwischengang, der zu der zweiten Synchronisierungskupplungsnabe gehört, und dem ersten Gang liegt, die zweite Synchronisierungskupplungsnabe (30) allein oder mit der ersten Synchronisierungskupplungsnabe (29) verwendet werden kann.

17. Verfahren nach Anspruch 14, **dadurch gekennzeichnet, dass** man bei den Gangherunterschaltungen, die mit Überspringen des Zwischengangs ausgeführt werden, entweder nur die erste Synchronisierungskupplungsnabe (29) verwendet oder die erste Synchronisierungskupplungsnabe (29), dann die zweite Synchronisierungskupplungsnabe (30) verwendet oder die zwei Synchronisierungskupplungsnaben (29, 30) und ein Freilaufrad (47) verwendet, das die zweite Synchronisierungskupplungsnabe (30) trennt, wenn die Drehzahl der Hauptwelle größer wird als die diesem Gang entsprechende Drehzahl.

18. Verfahren nach einem der Ansprüche 10 bis 17, **dadurch gekennzeichnet, dass** der Gebrauch der Synchronisierungskupplungsnaben (29, 30) von dem Momentniveau abhängt, das bei dem Gangwechsel zu übertragen ist, wobei die erste Synchronisierungskupplungsnabe (29) für Gangwechsel mit niedrigem Moment verwendet wird, wobei die zweite Synchronisierungskupplungsnabe (30) für Gangwechsel mit hohem Moment verwendet wird.

19. Kraftfahrzeug, das ein Schaltgetriebe aufweist, das gemäß einem der Ansprüche 1 bis 9 definiert ist.
